# EUROPÄISCHE PATENTSCHRIFT

(11) **EP 3 572 678 B1**
(45) Veröffentlichungstag und Bekanntmachung des Hinweises auf die Patenterteilung: **05.04.2023**
(21) Anmeldenummer: 18173475.7
(22) Anmeldetag: 22.05.2018
(51) Int. Cl.: F16B 25/00

(54) **KÖRPERSCHALLENTKOPPELNDES BEFESTIGUNGSELEMENT UND AUFHÄNGESYSTEM MIT EINEM SOLCHEN BEFESTIGUNGSELEMENT**
STRUCTURE-BORNE NOISE SECURING ELEMENT AND SUSPENSION SYSTEM COMPRISING SAID SECURING ELEMENT
ÉLÉMENT DE FIXATION À NEUTRALISATION DE BRUIT SOLIDIEN ET SYSTÈME DE SUSPENSION POURVU D'UN TEL ÉLÉMENT DE FIXATION

(43) Veröffentlichungstag der Anmeldung: 27.11.2019
(73) Patentinhaber: SFS Group International AG, 9435 Heerbrugg (CH)
(72) Erfinder: BREGAR, Sebastian, 9450 Lüchingen (CH); ROHNER, Markus Andreas, 9436 Balgach (CH)

(56) Entgegenhaltungen:
- JP-A- H09 324 811
- JP-U- H0 725 321

## Beschreibung

Die vorliegende Erfindung befasst sich mit einem Befestigungselement, insbesondere einer Schraube, deren spezifische Auslegung eine schallentkoppelnde Wirkung zwischen den Bauteilen ermöglicht, die die Schraube verbindet.

### HINTERGRUND

Im Bauwesen ist es häufig erforderlich, Einrichtungsgegenstände wie Möbel, Schränke, Regale an Wänden zu befestigen. Die lastabtragenden Verbindungselemente übertragen damit aber zwangsläufig auch Erschütterungen, die beim Belasten oder Entlasten der Einrichtungsgegenstände entstehen. Mit "schallentkoppelnd" ist daher im engeren Sinne "körperschallentkoppelnd" gemeint auch wenn im Folgenden der Einfachheit halber von "schallentkoppelnd" die Rede sein wird.

Eine Schallentkopplung ist in vielen Fällen wünschenswert, aus Gründen der Geräuschdämmung wie auch zur Vermeidung von Beschädigungen der Wandelemente.

### STAND DER TECHNIK

Es sind im Stand der Technik verschiedene Lösungen für dieses Problem der Schallentkopplung bekannt. So können elastische und/oder dämpfende Elemente vorgesehen werden, die zwischen Einrichtungsgegenstand und Wand bzw. Wandbauteil eingefügt werden. Bei einer Befestigung über Schraubverbindungen sind dämpfende Unterlagscheiben oder Kombinationen aus metallischen Unterlagscheiben mit einem flächigen, ringförmigen Feder- oder Dämpfungselementen aus Kunststoff, Gummi, Kork bekannt. Diese haben den Nachteil, dass sie jeweils separat vor der Montage dem Befestigungselement hinzugefügt werden müssen. Wird ein solches Dämpfungselement bei der Montage vergessen, falsch oder unvollständig eingesetzt, können (Körper-)Schallbrücken die Folge sein, die später sehr schwer zu entdecken und/oder zu korrigieren sind.

Ganz generell haben solche Lösungen den Nachteil, dass sie die Dämpfung im Wesentlichen nur in Richtung der Schraubenlängsachse ermöglichen. Häufig berührt aber der Schraubenschaft den Einrichtungsgegenstand bzw. dessen Befestigungspunkt und nicht allein die Unterseite des Schraubenkopfes bzw. der Unterlagscheibe. Dadurch entstehen Schallbrücken.

Im Stand der Technik JP H 09 324811 A wird ein als Schraube bzw. Nagel charakterisiertes Befestigungselement gezeigt, bei dem der Schraubenkopf (bis auf den Kraftangriff) und Teile des Schaftes mit einer Deckschicht überzogen, die aus einem Elastomer-harz bestehen kann. Der Überzug verbessert die äussere Erscheinung des Befestigungselementes im verbauten Zustand.

Es besteht von daher das Bedürfnis, ein Befestigungselement, insbesondere eine Schraube zu schaffen, die den Nachteil von Unterlagscheiben mit Dämpfungselementen vermeidet und darüber hinaus einfach in der Herstellung, der Konfektionierung und der Anwendung ist.

### BESCHREIBUNG DER ERFINDUNG

Diese Aufgabe wird durch ein schallentkoppelndes Befestigungselement gelöst mit den Merkmalen des unabhängigen Anspruchs 1. Ein Aufhängesystem für Einrichtungsgegenstände, das solche schallentkoppelnde Befestigungselemente nutzt, wird ab Anspruch 10 charakterisiert. Unteransprüche beschreiben jeweils weitere Varianten und Ausführungsbeispiele.

Ein schallentkoppelndes Befestigungselement 10 nach der vorliegenden Erfindung hat einen im Wesentlichen zylindrischen, sich entlang einer Mittenlängsachse 30 erstreckenden Körper 20. Dieser Körper 20 hat an einem Ende einen Kopf 12 mit einem Kraftangriff 28. Dieser kann wie im Stand der Technik bekannt ausgeführt sein. An den Kopf 12 schliesst sich ein Unterkopfabschnitt 14 und ein Halsbereich 16 an. Daran wiederum grenzt ein Schaftabschnitt 18, der mit einem Endabschnitt 26 abschliesst. Dieser Endabschnitt kann eine Bohrspitze sein, eine Verdrängerspitze oder eine andere, je nach vorhandenem Untergrund gewählte Spitze, die das Einformen erleichtert. Kennzeichnend ist hierbei, dass Oberflächenteile des Kopfes 12, des Unterkopfabschnitts 14 und des Halsbereichs 16 mit einem hartelastischen Material bedeckt sind, aber die stirnseitige, vom Schaftabschnitt wegweisende Fläche des Kopfbereichs 22 unbedeckt bleibt. Dadurch sind die am Kopf 12, im Unterkopfabschnitt 14 und im Halsbereich 16 alle radial nach aussen von der Mittelängsachse weg weisenden Oberflächenbereiche mit hartelastischem Material bedeckt und bilden somit eine Art Manschette. Auch der Kopf 12 weist am Rand eine Ummantelung auf als eine Art Flankenschutz.

Mit hartelastisch ist hierbei gemeint, dass das Material elastische Eigenschaften (formreversibel) aufweist, gleichzeitig aber geeignet ist, die im Einsatz vorgesehenen Lasten zu übertragen ohne die gewünschten Eigenschaften zu verlieren. Die Materialauswahl erfolgt so, dass das Material im verbauten Zustand (also unter Vorspannung) die körperschalldämpfende Wirkung entfalten kann. Dies können beispielsweise Thermoplaste sein, insbesondere TPE (thermoplastische Elastomere), TPU (thermoplastische Urethane) und TPV (thermoplastische Vulkanisate). Ein Thermoplast (bevorzugt TPE) mit einer ShoreA Härte von ca. 60 hat im beschriebenen Einsatzfall gute Dämpfungswerte ergeben. Je nach Einsatzbereich und Lastauslegung wird eine ShoreA-Härte von 40-70, bevorzugt 45-60 angestrebt.

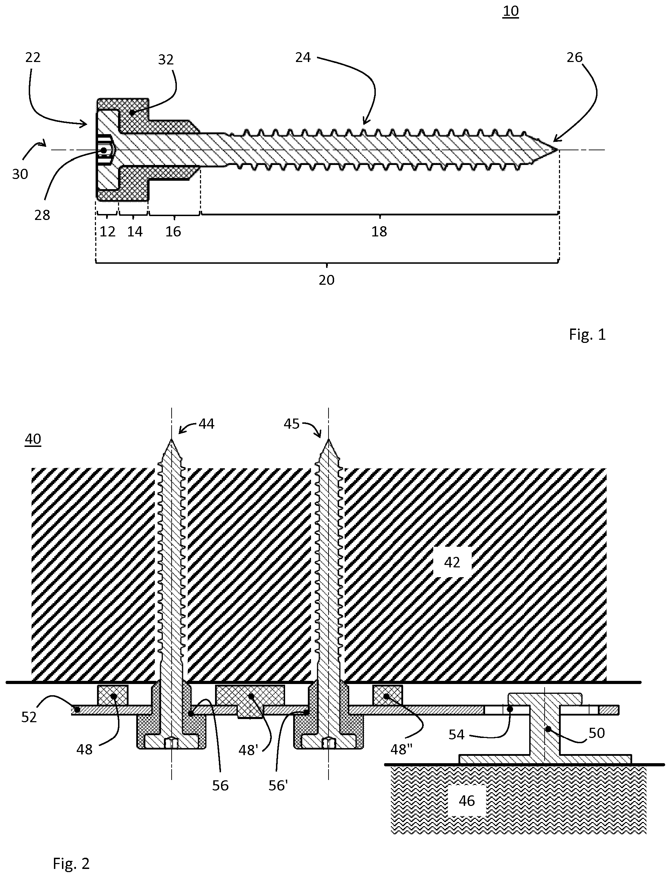

Mit Blick auf Figur 1 wird deutlich, dass die drei zumindest teilweise ummantelten Bereiche Kopf 12, Unterkopfabschnitt 14, Halsabschnitt 16 bevorzugt eine geschlossene Oberfläche zeigen. Der Halsabschnitt 16 befindet sich auf dem Schaft des Befestigungselementes, dort wird der effektive Aussendurchmesser wegen der Ummantelung grösser sein als auf dem anschliessenden Schaftabschnitt 18, der kein hartelastisches Material aufweist.

Als hartelastisches Material sind dabei je nach Einsatz- und Lastprofil verschiedene Kunststoffe verwendbar, Kautschuk, Gummi oder ähnliches, sowie Kombinationen davon. Denkbar ist auch, für die verschiedenen Bereiche Kopf 12, Unterkopfabschnitt 14 und Halsbereich 16 unterschiedliche Materialien zu verwenden, also mit verschiedenen Dämpfungs-/Elastizitätseigenschaften.

Der Kopf 12 des schallentkoppelnden Befestigungselements kann bevorzugt flanschartig ausgeführt sein und somit einen Aussendurchmesser aufweisen, der grösser als der grösste Aussendurchmesser im Schaftbereich 18 ist. Diese Ausführung ähnelt also einem Nagel- oder Schraubenkopf. Durch diese Ausführung entsteht ein Unterkopfbereich, eine Unterseite des Kopfes, die flach, das heisst eben und rechtwinklig orientiert zur Mittenlängsachse oder verkippt hierzu ausgeführt sein kann (also mit konischer oder kegeliger Oberfläche). Besonders bevorzugt wird auch diese Fläche mit demselben hartelastischen Material bedeckt sein. Ein solcher Unterkopfbereich 14, wie in der Figur 1 gezeigt, weist damit eine Oberfläche im Schaftbereich auf (radial von der Achse nach aussen orientiert) wie auch eine Oberfläche deren Orientierung in Schaftlängsrichtung ist.

Der Begriff Befestigungselement wurde bewusst gewählt, weil das erfinderische Prinzip nicht auf einen Befestigertyp beschränkt ist. Ein Befestigungselement kann eine Schraube, ein Bolzen, ein Maueranker, eine Klemmvorrichtung sein. In der Ausführung als Schraube kann der Schaftabschnitt 18 einen Gewindeabschnitt 24 aufweisen.

Die Herstellung eines erfindungsgemässen Befestigungselementes kann durch das Umspritzen einer Schraube, eines Bolzens, eines Mauerankers mit einem hartelastischen, spritzgiessfähigen Material erfolgen. Diese Vorgehensweise ist die bei weitem bevorzugte, weil sie perfekt formschlüssige Befestiger mit Manschette herzustellen vermag. Alternativ können auch vorgefertigte Formteile aufgesteckt und durch Erhitzen aufgeschrumpft, verklebt oder verschweisst werden. Wichtig ist, dass die oben beschriebene Manschette als definierte Ummantelung resultiert.

Mit den beschriebenen schallentkoppelnden Befestigungselementen lässt sich ein Aufhängesystem 40 für Einrichtungsgegenstände 46 wie Möbel, Schränke und Regale realisieren, die an einer Wand bzw. einem Wandabschnitt 42 schallentkoppelt befestigt werden sollen. Als Zwischenelement zwischen Wand und Möbelstück fungiert eine Tragleiste 52 mit Lastaufnahmepunkten 54 für solche Einrichtungsgegenstände 46. Mit Lastaufnahmepunkt ist dabei eine Aufnahme, ein Befestigungsloch, eine Anhänge-, Einsteck- oder Ankoppelvorrichtung gemeint. Befestigungspunkte 56, 56' dienen der Aufnahme von schallentkoppelnden Befestigungselemente 44, 45 als Verbindung zur Wand. Bevorzugt sind dies Bohrungen, die auf den Durchmesser des schallentkoppelnden Befestigers im Halsbereich 16 angepasst sind. Die Verbindung soll bevorzugt formschlüssig sein.

Die Verwendung einer Tragleiste 52 macht in mehrfacher Hinsicht Sinn. Sie ist leichter und kleiner als der Einrichtungsgegenstand selber und kann daher an der Wand leichter ausgerichtet und befestigt werden. Erst danach wird das Möbelstück 46 befestigt - lösbar eingehängt, eingeklickt oder unlösbar verschraubt oder eingerastet. Dazu kann es sinnvoll sein, am Möbelstück einen Adapter, ein passendes Verbindungselement 50 anzubringen, welches in die Tragleiste 52 eingehängt (oder anderweitig angebracht) werden kann. Dieses Verbindungselement 50 kann standardmässig bei der Herstellung des Einrichtungsgegenstandes am statisch idealen Punkt angebracht werden und erfordert damit vor Ort keinen zusätzlichen Verarbeitungsschritt.

In einer weiter verbesserten Variante wird das Aufhängesystem 40 Dämpfungselemente 48, 48', 48" zwischen Wandabschnitt 42 und Tragleiste 52 vorsehen Damit wird ein weiteres Dämpfungselement im Aufhängesystem vorgesehen, das verhindert, dass Erschütterungen bzw. Schall von der Tragleiste 52 auf die Wand 42 übertragen werden. Diese Dämpfungselemente 48, 48', 48" können als punktuelle oder flächige Silikon- oder Gummielemente ausgeführt werden, die in einer Variante in dafür vorgesehene Bohrungen der Tragleiste eingeklipst, -geklemmt oder geklebt werden. Ein Beispiel dafür zeigt Merkmal 48'. Diese flächigen Dämpfungselemente erlauben auch evtl. Unebenheiten der Wand 42 ggü. der Tragleiste 52 auszugleichen. Die schallentkoppelnden Befestigungselemente 44, 45 klemmen die Tragleiste 52 zwischen der hartelastischen Manschette (Bereiche 12, 14, 16) und den Dämpfungselementen 48, 48', 48".

Die Tragleiste ist somit in der beschriebenen Ausführung komplett in schall- bzw. schwingungsdämpfenden Materialien gelagert. Somit kann die Halterung des Möbelstücks 46 an der Tragleiste 52 "hart" erfolgen, sprich auf Dämpfungselemente verzichten und auch nur so viele Lastaufnahmepunkte 54 vorsehen, wie aus statischen Gründen notwendig sind. Die Lastableitung in die Wand 42 wiederum wird durch so viele schallentkoppelnde Befestigungselemente 44, 45 vorgenommen, wie dies aufgrund des Gewichts des Möbelstücks bzw. der Beschaffenheit des Untergrundes (Wand 42) erforderlich ist. Auf diese Weise kann dieses Aufhängesystem sehr präzise an verschiedene Aufgabenprofile angepasst werden.

Eine Tragleiste 52 wird damit bevorzugt als Metallteil mit einer Vielzahl von Bohrungen bzw. Aussparungen (Befestigungspunkte 56, 56', Lastaufnahmepunkt(e) 54) ausgeführt. Sie kann günstig als Stanzteil oder als Stanzbiegeteil ausgeführt werden. Falze können als Versteifungselemente vorgesehen werden. Eine Oberflächenbehandlung (Verzinken, Lackieren) kann zur Erhöhung von Korrosionsschutz oder als Markierung vorgesehen werden.

Das vorhin erwähnte Verbindungselement 50, das bevorzugt am Möbelstück / Einrichtungsgegenstand 46 vormontiert wird, kann bevorzugt als Einhängeelement ausgeführt werden. Als Ausführungsbeispiel kann die in Figur 2 gezeigte Form eines Dornes oder Zapfens mit einem Endflansch angeführt werden. Als Material findet bevorzugt Metall Verwendung. Die Herstellung kann als Formteil, Pressteil oder Drehteil erfolgen. Die Grösse und Auslegung orientiert sich an den statischen Anforderungen und kann vom Fachmann im Rahmen seiner Kenntnisse vorgenommen werden.

### BESCHREIBUNG DER FIGUREN

Figur 1 zeigt einen Längsschnitt durch ein schallentkoppelndes Befestigungselement gemäss der vorliegenden Erfindung.
Figur 2 zeigt schematisch im horizontalen Querschnitt ein Aufhängesystem für Möbelstücke mit ein schallentkoppelnden Befestigungselementen gemäss der vorliegenden Erfindung.

Figur 1 zeigt ein schallentkoppelndes Befestigungselement 10 gemäss der vorliegenden Erfindung in einer bevorzugten Ausführung als teilummantelte Schraube. Die Mittenlängsachse ist mit 30 markiert. Am Kopf 12 ist ein an seinen Flanken mit einem hartelastischen Material 32 ummantelter Schraubenkopf gezeigt, seine nach links weisende Stirnfläche 22 ist unbedeckt. In den Kopf ist in üblicher Weise ein Kraftangriff 28 eingearbeitet.

Die Ummantelung mit dem hartelastischen Material 32 bedeckt also die radial aussenliegenden Flanken des Kopfes 12, des Unterkopfbereichs 14 und des Halsbereichs 16. Zusammen werden sie in dieser Beschreibung als Manschette bezeichnet. Entlang der Längsachse 30 schliesst sich der Schaftabschnitt 18 an, der nicht mit hartelastischem Material bedeckt ist. Er kann jedoch in bekannter Weise mit anderen funktionellen Beschichtungen versehen werden, wie Lacken, Gleitschichten, Härteüberzügen o.ä., die das Einformen und Kennzeichnung (Farbkodierung) erleichtern können. Im gezeigten Beispiel trägt der Schaftabschnitt 18 ein Gewinde 24. Den Abschluss der gezeigten Variante von Figur 1 bildet die Spitze (Endbereich) des Befestigers, hier als Eindringspitze dargestellt. Dies ist jedoch nur eine von mehreren möglichen Ausführungsvarianten des Endabschnittes. Die Abschnitte Kopf 12, Unterkopfbereich 14, Halsbereich 16 mit anschliessendem Schaftbereich 18 bilden den Körper 20 des Befestigers.

Figur 2 zeigt ein erfindungsgemässes Aufhängesystem 40. Dessen wesentliche Bestandteile sind die Tragleiste 52 und die schallentkoppelnden Befestigungselemente 44, 45. Ergänzend können hinzu kommen die Dämpfungselemente 48, 48', 48", wir im funktionellen Teil der Beschreibung ausgeführt. Die Einbausituation zeigt die Tragleiste 52 an einer Wand bzw. einem Wandelement 42 befestigt wobei die Befestigungselemente 44, 45 die Tragleiste 52 via die Dämpfungselemente 48 klemmen. Rudimentär angedeutet ist ein Möbelstück / Einrichtungsgegenstand 46, der via ein Verbindungselement 50 an die Tragleiste 52 gehängt werden kann.

Die in der vorstehenden Beschreibung, in den Zeichnungen sowie in den Ansprüchen offenbarten Merkmale der Erfindung können sowohl einzeln als auch in beliebiger, jedoch technisch sinnvoller bzw. vorteilhafter Kombination für die Verwirklichung der Erfindung wesentlich sein. Eine nicht-explizite Darstellung einer Kombination von Merkmalen bedeutet nicht, dass eine solche Kombination nicht sinnvoll oder nicht möglich ist.

## Patentansprüche

1. Ein körperschallentkoppelndes Befestigungselement (10) mit einem im Wesentlichen zylindrischen, sich entlang einer Mittenlängsachse (30) erstreckenden Körper (20), wobei der Körper an einem Ende einen Kopf (12) mit einem Kraftangriff (28) umfasst, an den sich ein Unterkopfabschnitt (14) und ein Halsbereich (16) anschliesst sowie ein Schaftabschnitt (18), der mit einem Endabschnitt (26) abschliesst, **dadurch gekennzeichnet, dass** Oberflächenteile des Kopfes (12), des Unterkopfabschnitts (14) und des Halsbereichs (16) mit einem hartelastischen Material (32) bedeckt sind, aber die stirnseitige, vom Schaftabschnitt wegweisende Fläche des Kopfbereichs (22) unbedeckt bleibt; dergestalt, dass am Kopf (12), im Unterkopfabschnitt (14) und im Halsbereich (16) alle radial nach aussen von der Mittelängsachse (30) weg weisenden Oberflächenbereiche mit hartelastischem Material (32) bedeckt sind.

2. Befestigungselement nach Anspruch 1, **dadurch gekennzeichnet, dass** der Schaftabschnitt (18) nicht von hartelastischem Material bedeckt ist.

3. Befestigungselement nach Anspruch 1-2, **dadurch gekennzeichnet, dass** der Kopf (12) flanschartig ausgeführt ist und einen Aussendurchmesser aufweist, der grösser als der grösste Aussendurchmesser im Schaftbereich (18) ist.

4. Befestigungselement nach Anspruch 1-3, **dadurch gekennzeichnet, dass** die in Richtung des Schaftabschnittes (18) orientierte Unterseite des Kopfes (12) ebenfalls mit hartelastischem Material bedeckt ist.

5. Befestigungselement nach Anspruch 1-4, **dadurch gekennzeichnet, dass** das Befestigungselement eine Schraube, ein Bolzen, ein Maueranker, eine Klemmvorrichtung ist.

6. Befestigungselement nach Anspruch 1-5, **dadurch gekennzeichnet, dass** der Schaftabschnitt (18) einen Gewindeabschnitt (24) aufweist.

7. Befestigungselement nach Anspruch 1-6, **dadurch gekennzeichnet, dass** das hartelastische Material ein Thermoplast ist, insbesondere ein thermoplastisches Elastomer, Urethan und Vulkanisat (TPE, TPU, TPV).

8. Befestigungselement nach Anspruch 7, **dadurch gekennzeichnet, dass** das hartelastische Material ein Thermoplast ist, dessen ShoreA Härte zwischen 40 und 70 (beide Werte incl.) liegt.

9. Befestigungselement nach Anspruch 8, **dadurch gekennzeichnet, dass** das hartelastische Material ein Thermoplast ist, dessen ShoreA Härte zwischen 45 und 60 (beide Werte incl.) liegt.

10. Aufhängesystem (40) für Einrichtungsgegenstände (46) wie Möbel, Schränke und Regale an einem Wandabschnitt (42), umfassend körperschallentkoppelnde Befestigungselemente (44, 45) gemäss Anspruch 1 bis 9 sowie eine Tragleiste (52) mit Lastaufnahmepunkten (54) für Einrichtungsgegenstände (46) und Befestigungspunkte (56, 56') für besagte Befestigungselemente (44, 45).

11. Aufhängesystem (40) nach Anspruch 10, **dadurch gekennzeichnet, dass** Dämpfungselemente (48, 48', 48") zwischen Wandabschnitt (42) und Tragleiste (52) vorgesehen sind, welche durch die körperschallentkoppelnden Befestigungselemente (44, 45) geklemmt werden.

12. Aufhängesystem (40) nach Anspruch 10-11, **dadurch gekennzeichnet, dass** die Einrichtungsgegenstände (46) mit Hilfe eines Verbindungselementes (50) in die Tragleiste (52) einhängbar sind.

## Claims

1. A structure-borne sound decoupling securing element (10) having a substantially cylindrical body (20) extending along a central longitudinal axis (30), wherein the body comprises at one end a head (12) having a force engaging portion (28) adjoined by a lower head portion (14) and a neck portion (16), and a shank portion (18) which terminates with an end portion (26), **characterized in that** surface parts of the head (12), the lower head portion (14) and the neck portion (16) are covered with a hard-elastic material (32), but the face surface of the head portion (22) facing away from the shank portion remains uncovered; such that on the head (12), in the lower head portion (14) and in the neck portion (16) all surface regions facing radially outwardly away from the central longitudinal axis (30) are covered with hard-elastic material (32).

2. Securing element according to claim 1, **characterized in that** the shank portion (18) is not covered by hard-elastic material.

3. Securing element according to claim 1-2, **characterized in that** the head (12) is of flange-like design and has an outer diameter that is larger than the largest outer diameter in the shank region (18).

4. Securing element according to claim 1-3, **characterized in that** the underside of the head (12) oriented in the direction of the shank section (18) is also covered with hard-elastic material.

5. Securing element according to claim 1-4, **characterized in that** the securing element is a screw, a bolt, a wall anchor, a clamping device.

6. Securing element according to claim 1-5, **characterized in that** the shank portion (18) has a threaded portion (24).

7. Securing element according to claim 1-6, **characterized in that** the hard-elastic material is a thermoplastic, in particular a thermoplastic elastomer, urethane and vulcanizate (TPE, TPU, TPV).

8. Securing element according to claim 7, **characterized in that** the hard-elastic material is a thermoplastic whose ShoreA hardness is between 40 and 70 (both values incl.).

9. Securing element according to claim 8, **characterized in that** the hard-elastic material is a thermoplastic whose ShoreA hardness is between 45 and 60 (both values incl.).

10. Suspension system (40) for furnishings (46) such as furniture, cabinets and shelves on a wall section (42), comprising structure-borne sound decoupling securing elements (44, 45) according to claim 1 to 9 as well as a support bar (52) with load-bearing points (54) for furnishings (46) and securing points (56, 56') for the securing elements (44, 45).

11. Suspension system (40) according to claim 10, **characterized in that** damping elements (48, 48', 48") are provided between the wall section (42) and the support bar (52), which are clamped by the structure-borne sound decoupling securing elements (44, 45).

12. Suspension system (40) according to claim 10-11, **characterized in that** the furnishings (46) are suspendable in the support bar (52) by means of a connecting element (50).

## Revendications

1. Élément de fixation (10) à neutralisation de bruit solidien avec un corps (20) essentiellement cylindrique s'étendant le long d'un axe longitudinal central (30), le corps comprenant à une extrémité une tête (12) avec une prise de force (28), à laquelle se raccordent une section sous la tête (14) et une zone de collerette (16), ainsi qu'une section de tige (18) qui se termine par une section d'extrémité (26), **caractérisé en ce que** des parties de surface de la tête (12), de la section sous la tête (14) et de la zone de collerette (16) sont recouvertes d'un matériau élastique dur (32), la surface frontale de la zone de tête (22), orientée à l'opposé de la section de tige, reste non recouverte ; de telle sorte que sur la tête (12), dans la section sous la tête (14) et dans la zone de collerette (16), toutes les zones de surface orientées radialement vers l'extérieur à l'opposé de l'axe longitudinal central (30) sont recouvertes de matériau élastique dur (32).

2. Élément de fixation selon la revendication 1, **caractérisé en ce que** la section de tige (18) n'est pas recouverte de matériau élastique dur.

3. Élément de fixation selon les revendications 1 à 2, **caractérisé en ce que** la tête (12) est réalisée en forme de bride et présente un diamètre extérieur qui est plus grand que le plus grand diamètre extérieur dans la zone de tige (18).

4. Élément de fixation selon les revendications 1 à 3, **caractérisé en ce que** la face inférieure de la tête (12) orientée en direction de la section de tige (18) est également recouverte de matériau élastique dur.

5. Élément de fixation selon les revendications 1 à 4, **caractérisé en ce que** l'élément de fixation est une vis, un boulon, un ancrage mural, un dispositif de serrage.

6. Élément de fixation selon les revendications 1 à 5, **caractérisé en ce que** la section de tige (18) présente une section filetée (24).

7. Élément de fixation selon les revendications 1 à 6, **caractérisé en ce que** le matériau élastique dur est un thermoplastique, en particulier un élastomère, un uréthane et un caoutchouc vulcanisé thermoplastique (TPE, TPU, TPV).

8. Élément de fixation selon la revendication 7, **caractérisé en ce que** le matériau élastique dur est un thermoplastique dont la dureté ShoreA est comprise entre 40 et 70 (les deux valeurs étant incluses).

9. Élément de fixation selon la revendication 8, **caractérisé en ce que** le matériau élastique dur est un thermoplastique dont la dureté ShoreA est comprise entre 45 et 60 (les deux valeurs étant incluses).

10. Système de suspension (40) pour objets d'ameublement (46) tels que meubles, armoires et rayonnages sur une section de paroi (42), comprenant des éléments de fixation (44, 45) à neutralisation de bruit solidien selon les revendications 1 à 9, ainsi qu'une barre de support (52) avec des points de réception de charge (54) pour des objets d'ameublement (46) et des points de fixation (56, 56') pour lesdits éléments de fixation (44, 45).

11. Système de suspension (40) selon la revendication 10, **caractérisé en ce que** des éléments d'amortissement (48, 48', 48") sont prévus entre la section de paroi (42) et la barre de support (52), lesquels sont serrés par les éléments de fixation (44, 45) à neutralisation de bruit solidien.

12. Système de suspension (40) selon les revendications 10 à 11, **caractérisé en ce que** les objets d'ameublement (46) peuvent être accrochés dans la barre de support (52) à l'aide d'un élément de liaison (50).
